# EUROPÄISCHE PATENTANMELDUNG

(11) **EP 1 892 598 A2**
(43) Veröffentlichungstag der Anmeldung: **27.02.2008**
(21) Anmeldenummer: 07010198.5
(22) Anmeldetag: 23.05.2007
(51) Int. Cl.: G05B 23/02, G05B 19/418, G05B 19/406, G05B 19/408

(54) **Automatisierungssystem und Verfahren zur Taktzeit-, Prozess- und/oder Maschinenoptimierung**

(30) Priorität: 22.08.2006 DE 102006039244
(71) Anmelder: ROBERT BOSCH GMBH, 70469 Stuttgart (DE)
(72) Erfinder: Landgraf, Günther, 97753 Karlstadt (DE)
(74) Vertreter: Thürer, Andreas

(57) **Zusammenfassung**

Automatisierungssystem mit einer CNC-Steuerung, welche wenigstens zwei Datenverarbeitungsebenen, insbesondere eine Datensatzvorbereitungsebene (150) und eine Datensatzabarbeitungsebene (160)umfasst, ferner mit den jeweiligen Datenverarbeitungsebenen zugeordneten Taktzeiterfassungsmitteln (120 - 124) zur Erfassung von Taktzeiten von Teilsystemen in den jeweiligen Datenverarbeitungsebenen, und Mitteln zum Vergleichen und zeitlichen In-Beziehung-Setzen der für die jeweiligen Datenverarbeitungsebenen ermittelten Taktzeiten.

## Beschreibung

Die vorliegende Erfindung betrifft ein Automatisierungssystem sowie ein Verfahren zur Taktzeit-, Prozess- und/oder Maschinemoptimierung.

### Stand der Technik

Ein bekanntes Problem bei der Konzipierung und Inbetriebnahme von Automatisierungssystemen ist die Einhaltung bzw. Optimierung der Gesamttaktzeit unter Berücksichtigung der Taktzeiten einzelner Abläufe innerhalb der verschiedenen Teilsysteme, wie SPS, NC, Antrieb usw. Typischerweise generieren derartige Automatisierungssysteme Daten auf unterschiedlichen Zeitebenen und/oder in verschiedenen Teilsystemen. Eine Optimierung derartiger Automatisierungssysteme mittels einer Reduktion der Taktzeiten, wobei hier sowohl der Gesamtablauf als auch Teilabläufe umfasst sind, wird angestrebt.

Weitere Optimierungsmöglichkeiten liegen im Bereich der Prozess- und Maschinenanalyse. Aufgrund des möglichen Satzbezugs zu den Prozesssignalen, wie etwa dem Motorstrom soll das Tool dem Anwender, auch bei den Prozessoptimierungen, wie z.B. Bearbeitungsanschnitte (vom schnellen Anrücken des Werkzeugs, über die erste Berührung bis zum vollständigen Kraftaufbau) unterstützen. Dort wo der Prozess nicht mehr in ausreichendem Maße gesteuert werden kann, beginnt das Thema "Maschinenoptimierung". Ist die Maschinensteifigkeit beispielsweise für die durchzuführende Bearbeitung nicht in ausreichendem Maße gewährleistet, oder treten in verschiedenen Signalen unzulässige Schwingungen auf, wie etwa im Motorstrom, in der Achsgeschwindigkeit oder -positionen, dann sind häufig - wenn auch mehrfaches Optimieren der Prozessparameter nicht weiter führt - konstruktive Maßnahmen erforderlich.

Gegenwärtig haben bei typischen Automatisierungssystemen die verschiedenen Teilsysteme, wie SPS, NC oder Antriebe bzw. Drives ihre jeweils speziell zugeordneten Analysetools. CNC-seitig gibt es kein Tool; das auf den verschiedenen Zeitebenen Daten taktsynchron sammelt und/oder anzeigt. Weiterhin sind keine Tools, bekannt, die übergeordnet die Taktzeiten anzeigen.und gegebenenfalls bei Bedarf spezielle Daten der Teilsysteme (wie z.B. den antriebsseitigen Motorstrom oder Zustand eines SPS-Merkers) bzw. eine synchrone grafische Simulation bereitstellen.

Herkömmliche Analysetools sind auf die speziellen Bedürfnisse eines Systems bzw. einzelner Teilsysteme zugeschnitten, wodurch eine allgemeinere Anwendung, wie etwa die Optimierung einer Gesamttaktzeit erschwert ist.. Beispielsweise berücksichtigt die Oszilloskopfunktion eines Antriebs ausschließlich Daten des Antriebs, und bietet in diesem Kontext auch nur spezielle Darstellungen der Daten an. Die dort aufgezeichneten Daten werden mit den dort vorhandenen Uhrzeiten abgespeichert. Eine Synchronisation dieser Uhren mit den Uhren anderer Teilsysteme ist in der Regel nicht gegeben. Die Daten werden nicht in Beziehung gesetzt mit den Taktzeiten weiterer Teilsysteme oder dem übergeordneten (durch das NC-Programm vorgegebenen) Gesamtablauf.

Des weiteren sind Taktzeitanalyse-Tools bekannt, bei denen die Daten auf einem PC über eine jeweilige Steuerungsschnittstelle erfasst werden. Hierbei werden die relevanten Daten (z.B. aktueller NC-Satz oder aktueller Motorstrom), bei Änderung bzw. zyklisch aus der Steuerung geladen und PC-seitig mit einen Zeitstempel versehen. Eine über die einzelnen Teilsysteme, wie Hardware und Software sowie insbesondere auf unterschiedlichen zeitlichen Ebenen, wie z.B. bei einer NC auf Ebene der Satzvorbereitung und Satzabarbeitung, zeitsynchrone Erfassung von Daten auf den jeweiligen Zeitebenen des Automatisierungssystems ist hierbei nicht vorgesehen. Als Folge derartiger Vorgehensweisen sind bei typischen Anwendungen zeitliche Schwankungen von bis zu einer Sekunde nicht vermeidbar. Ferner sind kurze Vorgänge mit einer Dauer von weniger als einer Sekunde nicht sicher erfassbar.

Mit der vorliegenden Erfindung wird angestrebt, bei Automatisierungssystemen ein taktsynchrones Aufzeichnen von Daten über verschiedene Zeitebenen und Teilsysteme hinweg zur Verfügung zu stellen. Insbesondere wird eine Visualisierung der relevanten Daten zur Bereitstellung eines Überblicks über die Taktzeiten angestrebt. Ferner wird eine taktsynchrone Visualisierung der aufgezeichneten Daten unter dem Aspekt der Taktzeit-, Prozess- und/oder Maschinenoptimierung angestrebt.

Die Erfindung stellt zu diesem Zwecke für ein Aütomatisierungssystem ein Verfahren zur Taktzeit-, Prozess- und/oder Maschinenoptimierung mit den Merkmalen der unabhängigen Patentansprüche zur Verfügung. Vorteilhafte' Ausgestaltungen sind Gegenstand der Unteransprüche sowie der nachfolgenden Beschreibung.

### Vorteile der Erfindung

Erfindungsgemäß ist nun eine taktsynchrone Datenerfassung über die verschiedenen Zeitebenen der CNC-Steuerung eines Automatisierungssystems, beispielsweise auf den Ebenen der Satzvorbereitung und Satzabarbeitung bereitgestellt. Dies ermöglicht insbesondere eine Visualisierung der erfassten Daten in zeitlichem Bezug zueinander. Damit ist es erfindungsgemäß möglich, neben der Interpretationszeit, der Satzaufbereitungszeit, der Satzabarbeitungszeit (und damit auch der zwischen Satzaufbereitung und Satzausführung liegende Zeit) mit relevanten, die Taktzeit beeinflussende Abläufen auf der NC, der SPS oder auf einem Drive (z.B. die Beschleunigungs-/Bremsphasen in Form der aktuellen Achsbeschleunigung und/oder Motorstroms) µs-genau anzuzeigen. Auf diese weise wird der Anwender in die Lage versetzt die einzelnen Abläufe innerhalb des Automatisierungssystems µs-genau zueinander und insbesondere mit dem Gesamtablauf (etwa dem NC-Programm) in Beziehung zu bringen.

Erfindungsgemäß ist unter Verwendung des Tools schnell erkennbar, in welchem Teilablauf noch Verbesserungspotential bezüglich der Taktzeiten besteht. Ferner sind mittels Heranziehung weiterer Daten auf unterschiedlichen Zeitebenen und in den jeweiligen Teilsystemen, einschließlich deren zeitsynchroner Darstellung, genauere Analysen möglich.

Zweckmäßigerweise weist das erfindungsgemäße Automatisierungssystem Mittel zur Visualisierung der ermittelten Taktzeiten auf. Mittels einer derartigen Visualisierung ist für einen Programmierer, Inbetriebnehmer oder Maschinenbetreiber des Systems in besonders einfacher Weise erkennbar, wo Einsparpotential bestehen kann bzw. an welchen Stellen Optimierungen möglich sind.

Vorteilhafterweise sind Mittel zum regelmäßigen oder selektiven Beaufschlagen und/oder Abfragen der Taktzeiterfassungsmittel vorgesehen. Durch selektive oder regelmäßige Bereitstellung von Daten mit den zugehörigen Taktzeiten können die einzelnen Optimierungsschritte während der Inbetriebnahme in einfacher Weise hinsichtlich ihrer Wirksamkeit überprüft werden. In der gleichen Weise lässt sich auch während des späteren Betriebs des Automatisierungssystems feststellen, ob es über die Zeit in seiner Wirksamkeit nachläßt. Ferner ist es möglich, die im Laufe des Betriebes des Automatisierungssystems gewonnene Erkenntnisse in eine neue Taktzeiterfassung einzubeziehen.

In besonders vorteilhafter Weise umfassen die internen und/oder externen Teilsysteme Drive-, SPS-, NC-, und/oder RC-Systeme. Eine erfindungsgemäße Koordinierung derartiger Systeme führt zu besonders großen Einsparpotentialen.

Zweckmäßigerweise sind die Taktzeiterfassungsmittel als interne über die einzelnen Teilsysteme (Hardwaregrenzen) hinweg-miteinander synchronisierte Uhren ausgebildet. Derartige Uhren sind typischerweise in Automatisierungssystemen enthalten, jedoch nicht miteinander synchronisiert, so dass Ereignisse auf den verschiedenen Teilsyxtemen zwar µs-genau erfasst, aber nicht ohne weiteres µs-genau miteinander in Beziehung gebracht werden können.

Weitere Vorteile und Ausgestaltungen der Erfindung ergeben sich aus der Beschreibung und der beiliegenden Zeichnung.

Es versteht sich, dass die vorstehend genannten und nachstehend noch zu erläuternden Merkmale nicht nur in der jeweils angegebenen Kombination, sondern auch in anderen Kombinationen oder Alleinstellung verwendbar sind, ohne den Rahmen der vorliegenden Erfindung zu verlassen.

Die Erfindung wird anhand eines Ausführungsbeispiels in der Zeichnung schematisch dargestellt und im folgenden unter Bezugnahme auf die Zeichnung ausführlich beschrieben.

### Figurenbeschreibung

- Figur 1: zeigt ein Blockschaltbild zur Erläuterung einer bevorzugten Ausführungsform der erfindungsgemäßen Taktzeit-, Prozess- und/oder Maschinenoptimierung;
- Figur 2: zeigt eine bevorzugte Ausführungsform einer im Rahmen der Erfindung einsetzbaren Visualisierung der ermittelten Daten (Signale) mit Zeitbezug zu den jeweiligen NC-Sätzen des NC-Programms; und
- Figur 3: zeigt ein weiteres Blockschaltbild zur Darstellung weiterer Aspekte der vorliegenden Erfindung.

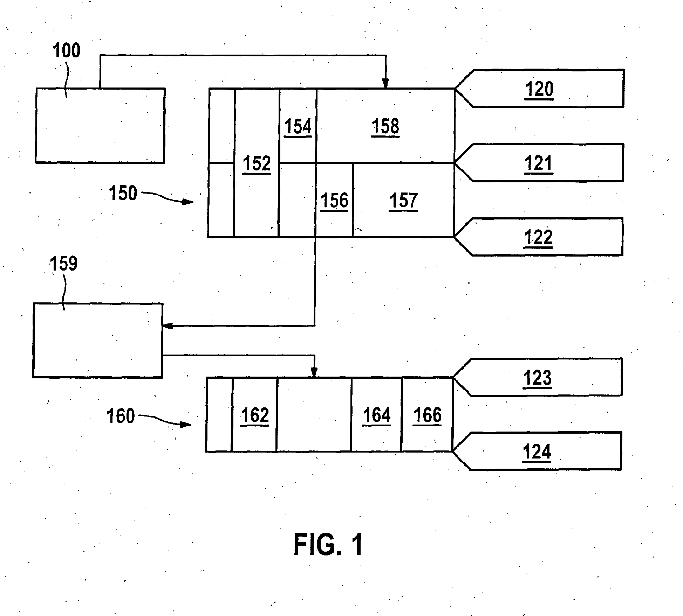

Figur 1 beschreibt das Grundprinzip einer CNC-Steuerung. Das NC-Programm einer nicht im einzelnen dargestellten CNC-Steuerung ist schematisch dargestellt und mit 100 bezeichnet. Bei Aufruf des NC-Programms 100 durch die Steuerung wird das Programm, in an sich bekannter Weise, aus einem Speicher in ein RAM geladen. Das NC-Prögramm stellt beispielswe'ise einen Ablauf.für eine Roboteranlage zur Verfügüng.

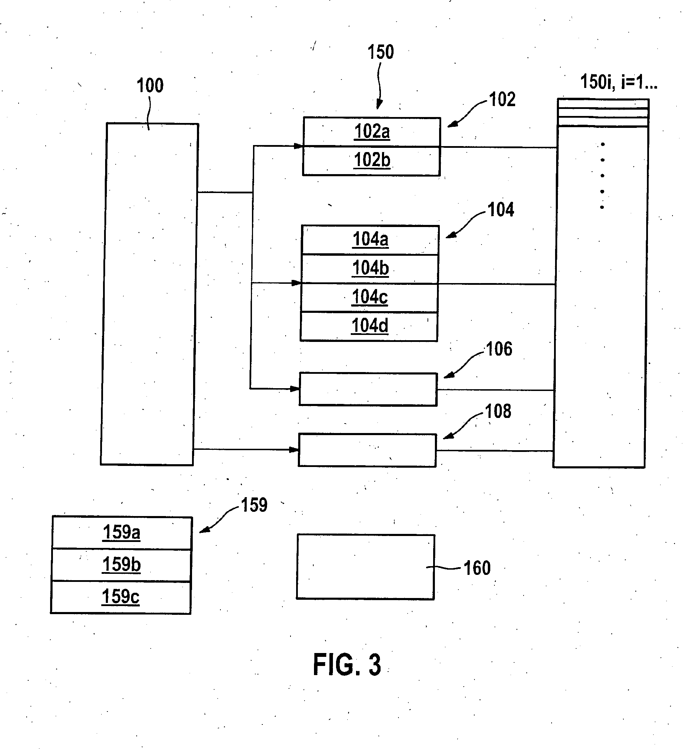

Die in den RAM geladenen Daten werden zunächst einer Satzvorbereitung SAV unterzogen, welche mit 150 bezeichnet ist. Diese Satzvorbereitung 150 stellt eine erste zeitliche Ebene des NC-Programms dar, welches typischerweise im Millisekundenbereich abläuft. Ziel der Satzvorbereitung 150 ist eine Aufbereitung der durch das NC-Programm 100 zur Verfügung gestellten Daten, wobei mit diesen aufbereiteten NC-Datensätzen eine Interpolatortätigkeit IPO (mit 160 bezeichnet) realisierbar sein muss, welche im Mikrosekundenbereich bzw. in Echtzeit abläuft. Diese Interpolatortätigkeit 160 stellt eine zweite zeitliche Ebene innerhalb des Gesamtsystems dar. Es sei angemerkt, dass diese grobe Unterteilung in zwei Zeitebenen lediglich zur Veranschaulichung der Erfindung dient. Tatsächlich realisierte Systeme können eine Vielzahl an derartigen Ebenen aufweisen, wie weiter unten noch anhand der Figur 3 dargestellt wird.

Typische Anwendungen bzw. Aufbereitungen im Rahmen der Satzvorbereitung 150 sind die Beaufschlagung der Daten des NC-Programms 100 mit Basisbefehlssätzen bzw. Bewegungskommandos, beispielsweise nach DIN 66025 (Bezugszeichen 152). Ferner kann hier (bei 154 dargestellt) eine Aufbereitung der kundenspezifischen Programmiersprache (customerprogramming-language) erfolgen (CPL-Sätze). Einfügesätze (mit 156 bezeichnet) fügt die Satzaufbereitung beispielsweise ein, wenn die Werkzeugradius-Korrektur eingeschaltet ist und eine Ecke umfahren wird. Die Satzaufbereitung fügt in einem solchen Fall als Zwischensatz ein Kreissegment ein.

Die Satzvorbereitung 150 umfasst insgesamt eine Interpretation 158 der von dem NC-Programm 100 erhaltenen Daten sowie eine Satzaufbereitung 157. Interpretation und Satzaufbereitung können teilweise parallel ablaufen. Es ist jedoch ebenfalls möglich, die Satzaufbereitung 157 nach Beendigung " der Interpretation 158 auszuführen.

Mittels interner miteinander synchronisierter Uhren 120-124, welche in einem Rechner vorgesehen sind, auf denen das NC-Programm 100 abläuft, werden beispielsweise, zu Beginn der Interpretation (mittels Uhr 120), zum Ende der Inter-pretation (mittels Uhr 121) (wobei dieser Zeitpunkt mit dem Beginn der Satzaufbereitung übereinstimmen kann) sowie zum Ende der Satzaufbereitung (mittels Uhr 122) Zeitstempel generiert. Mittels dieser Zeitstempel ist eine zeitliche bzw. funktionale Überwachung des NC-Programms sowie aller diesen Gesamtablauf beeinflussenden Teilabläufe, wie etwas die Beschleunigungsphase eines Antriebs, oder das Schalten eines Hydraulikventils für das Öffnen eines Werkzeuggreifers in einfacher Weise möglich, wie weiter unten erläutert wird.

Die im Rahmen der Satzaufbereitung generierten Daten bzw. Datensätze werden, wie bereits erwähnt, in der Interpolatoreinrichtung 160 abgearbeitet (Schritt 166). Auch hier wird der Beginn der Interpolation (mittels Uhr 123) sowie das Ende der Interpolation (mittels Uhr 124) zeitlich erfasst, bevorzugt wiederum mittels von miteinander synchronisierten Uhren generierten Zeitstempeln.

Hierbei können die im Rahmen der Satzvorbereitung bzw. Satzaufbereitung generierten Daten in einem Speicher für aufbereitete NC-Sätze zwischengespeichert werden (in Figur 1 schematisch dargestellt und mit 159 bezeichnet).

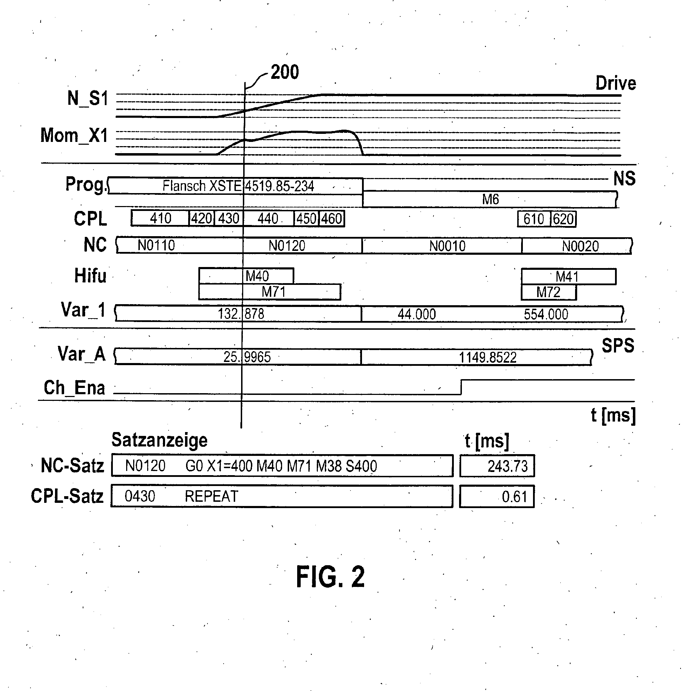

Auf der Grundlage der ermittelten Zeitstempel ist eine Optimierung des Gesamtablaufs (z.B. eines NC-Programms zur Fertigung eines Drehteils) in einfacher Weise möglich, wie nun anhand der Figur 2 beispielhaft erläutert wird. Diese stellt eine im Rahmen der Erfindung vorgesehene Visualisierung der jeweils (z.B. mittels der Zeitstempel) ermittelten Taktzeiten dar. Die aufzuzeichnenden, zu speichernden und später zu visualisierenden Daten wählt der Anwender im Vorfeld über entsprechende Dialoge aus.
Lediglich beispielhaft sei angegeben, dass sich die Zeile N_S1 auf die Drehzahl einer Spindel bezieht. Die zweite Zeile Mom_X1 zeigt das Drehmoment einer Achse. Die weiteren Zeilen betreffen Programme bzw. Unterprogramme beispiels-weise zum automatischen Drehen einer Lageraufnahme.

Bei der Zeile "PROG" handelt es sich beispielsweise um das Hauptprogramm (NC-Programm), welches entsprechende Unterprogramme, beispielsweise M6, welches einen Werkzeugwechsel einleitet, aufruft. Weitere Unterprogramme bzw. Variablen sind mit den weiteren Abkürzungen CPL (bereits erwähnt), NC (NC-Satz), Hifu (Hilfsfunktionen für den schnellen Datenaustausch zwischen NC und SPS (Speicherprogrammierungssteuerung), Var_1 (Variable der NC), Var_A (Variable der SPS) und Ch_Ena (Schnittstellensignale zwischen NC und SPC) bezeichnet. Mittels eines Cursors 200, der beispielsweise kontinuierlich entlang der jeweiligen Zeilen verschiebbar ist, ist eine vergleichende Betrachtung der sich in den einzelnen Zeilen ergebenden Taktzeiten bzw. Steuerzeiten realisierbar. Ein weiterer Cursor könnte beispielsweise als Messcursor eingesetzt werden, etwa um Zeiten eines bestimmten Vorgangs relativ zum Gesamtablauf zu messen, wie etwa die Beschleunigungsphase eines Antriebs zu Beginn einer bestimmten Bearbeitungssequenz.

In der Zeile NC werden die NC-Sätze dargestellt. Hier fällt auf das der NC-Satz N0010 relativ lange dauert. Es wäre nun beispielsweise zu prüfen, ob durch vorzeitiges Setzen der Kanalfreigabe (Ch_Ena auf der SPS) die Ausführungszeit dieses Satzes reduziert werden könnte. In der gleichen Weise scheint im Satz N0120 der Momentenverlauf nicht optimal zu sein (s. Fig. 2, Mom_X1). Hier sollte als nächstes das Beschleunigungsmoment der Achse in der Hochlauf- und Bremsphase näher untersucht werden. Weiteres Einsparungspotential lässt sich u.U. beim Spindelhochlauf erreichen (N_S1). Die Überprüfung der über die Hilfsfunktionen M40, M71 und M88 angesteuerten Teilabläufe bieten u.U. (durch eine nähere Analyse) ebenfalls Einsparungspotential. Möglicherweise könnte der Vorgang M71 "Werkzeuggreifer öffnen" auf der SPS nach Durchführung spezifischer Überwachungen etwas früher gesetzt werden und damit die Ansteuerung des Hydraulikventils zum Öffnen eines Werkzeuggreifer etwas weniger Hauptzeit erfordern. Eine andere Möglichkeit besteht u.U. darin, die Hilfsfunktion M71 bereits einen NC-Satz früher auszugeben.

Im unteren Teil der Figur 2 wird der über den Cursor selektierte NC-Satz bzw. selektierte CPL-Satz angezeigt sowie die jeweilige Ausführungszeit. Im Beispiel ist dies der NC-Satz "G0 X1=400 M40, M71, M88, S400" mit einer Ausführungszeit von 243,73 ms und ein CPL-Satz "REPEAT" mit 0,61 ms.

Ein anderer wichtiger Anwendungsfall der Taktzeitanalyse ist die Prozeß- und Maschinenoptimierung, beispielsweise lässt sich damit durch gleichzeitiges Aufzeichnen des Motorgebers sowie des externen Gebers, unmittelbar die Maschinennachgiebigkeit während der Bearbeitung (bei Bedarf auch über den gesamten Bearbeitungsprozess hinweg) aüfzeichnen, speichern, anzeigen, beurteilen und erforderlichenfalls optimieren.

Figur 3 zeigt eine mögliche interne Realisierung auf der NC in größerem Detail. Insbesondere dient diese Figur zur Veranschaulichung der in der Praxis auftretenden zahlreichen Steuerungsebenen (Zeitebenen: Tasken, Sections, Funktionen); insbesondere auf Ebene der Satzvorbereitung 150, der Satzabarbeitung 166 und auf dem Interpolator 160.
Mit jeder NC-Funktion verknüpft sind sogenannte
- Start-Jobs 102, die nur beim Aufruf der betreffenden NC-Funktion einmalig bearbeitet werden;
- Modal-Jobs 104, die mit jedem neu eingelesenen NC-Satz erneut aufgerufen werden (bis sie mittels eines weiteren NC-Befehls entfernt werden) sowie
- Exit-Jobs, die einmalig bei Abwahl der betreffenden Funktion bearbeitet werden.

Das Einschalten der Aufzeichnung erfolgt wahlweise mittels eines Befehls im NC-Programm 100, wie etwa OSC(1) oder über eine geeignete, nicht dargestellte Oberfläche mittels einer Taste. Sobald ein Kommando zur Aufzeichnung von NC-Sätzen und/oder satzbezogenen bzw. nicht-satzbezogenen Signalen (einschließlich entsprechender Triggerbedingungen) von einem Teilsystem des Steuerungssystems aus abgesetzt wird, aktiviert die NC anhand der jeweils vom Anwender vorgegebenen (aufzuzeichnenden) Daten (Signale) die erforderlichen Start- (102), Modal- (104) und Exit-Jobs (106) zur Aufzeichnung der Daten auf den verschiedenen Ebenen des Steuerungssystems.

In einem Start-Job (mit den Funktionen OscOnStart und Os-cOnIpoBlk) werden die für die Aufzeichnung erforderlichen Vorbereitungen, wie etwa das Anfordern von Speicher, oder die für die aufzuzeichnenden Daten Adressberechnungen durchgeführt. Die verschiedenen Ebenen bzw. Funktionen des Start-Jobs 102 sind schematisch und mit 102a, 102b bezeichnet.

In Figur 3 sind beispielhaft einige für die Aufzeichnung relevante Modalfunktionen (OscPrep, SaveBlkData, OscEndOfPrep und OscPärser) 104a bis 104d des Modal-Jobs 104 aufgeführt. Sie zeichnen innerhalb der verschiedenen Ebenen der Satzvorbereitung 150, der Satzabarbeitung 166'und des Interpolators 160 (sowie erforderlichenfalls auch auf den übrigen Teilsystemen wie SPS.und Drives) die vom Anwender ausgewählten Daten einschließlich den zugehörigen Zeitstempeln mittels taktsynchroner Uhren (in Fig. 3 nicht dargestellt) auf. Auf diese Weise wird beispielsweise auf Satzvorbereitungsebene der jeweilige NC-Satz, das jeweilige Unterprogramm, die aktiven Unterprogrammebenen, die Achspositionen in Werkstückkoordinaten; auf Satzabarbeitungsebene die Bahngeschwindigkeit und auf Interpolator-Ebene die aktuelle Achsgeschwindigkeit mit den zugehörigen Zeitstempeln festgehalten. Mit Beenden der Aufzeichnung führt die NC den Exit-Job (106) OscOffIpoBlk aus, der beispielsweise temporären Speicher wieder freigibt.

Unter Verwendung des NC-Befehls OSC() oder über eine geeignete, nicht dargestellte Oberfläche mittels einer Taste, wird die Aufzeichnung abgebrochen. Hierzu arbeitet die NC einen weiteren Start-Job 108 OscOffStart ab und entfernt insbesondere die Modal-Jobs 104.

Mittels der verschiedenen Jobs 102 bis 108 können beispielsweise interne Satzspeicher angefordert werden, Adressen, wie etwa das Kanal-, Achs- und Spindelinterface zwischen NC- und SPS aufgezeichnet werden, oder Token für permanente CPL-Variablen oder für Sercos-Daten ermittelt werden.

Links unten in Figur 3 ist der Speicher (159) angedeutet. Ein Bereich Ctrl (Bezugsziffer 159a) dient zur Konfiguration der Aufzeichnung, wie etwa zur Vorgabe der Signale oder dem Zeitraster in dem die Signale bzw. Daten aufzuzeichnen sind. Ein Bereich BlPrepOszi (159b) steht für den Speicher, in dem die auf Satzvorbereitungsebenen ermittelten Daten und Signale gespeichert werden. Unter IpoOszi (159c) werden die auf dem Interpolator anfallenden Daten und Signale gespeichert. Die beiden letztgenannten Speicher können auch in Form eines Wechselbuffers realisiert werden, um innerhalb der NC auch über längere Zeiträume größere Datenmengen mit einer hohen Abtastrate aufzeichnen zu können.

Die Anbindung weiterer an einer Aufzeichnung beteiligter Systeme erfolgt durch die Weitergabe des Triggersignals zwischen den Systemen. Wesentliche Voraussetzung für die Teilsystem-übergreifende taktsynchrone Aufzeichnung sind die über die Teilsystemgrenzen hinweg miteinander synchronisierten Uhren.

Insgesamt ist erfindungsgemäß ein Werkzeug bzw. Tool bereitgestellt, mit dessen Hilfe taktzeitrelevante Daten aufgezeichnet, gespeichert, verwaltet, aufbereitet und in verschiedensten Arten grafisch darstellbar sind. Hier wird beispielsweise auf Balkendiagramme oder Kuchendiagramme verwiesen. Erfindungsgemäß ist eine sehr hohe Genauigkeit der Zeiterfassung realisiert. Daten auf sämtlichen Zeitebenen der Steuerung können damit erfasst und aufgezeichnet werden (nicht nur-IPO-Daten). Ein zeitlicher Bezug ist über alle Zeitebenen hinweg, insbesondere über im Gesamtsystem vorhandene synchronisierte Uhren bereitstellbar und durch die grafische Aufbereitung, entsprechend visualisierbar. Hiermit können aufgezeichnete Satzinformationen und sonstige aufgezeichnete Daten und Signale der verschiedenen Steuerungsebenen zeitsynchron angezeigt werden. Eine zeitsynchrone grafische Bearbeitungssimulation kann bei Bedarf hinzugezogen werden, welche beispielsweise eine vorwärts oder rückwärts ausgerichtete Satzfortschaltung umfassen kann.

## Patentansprüche

1. Automatisierungssystem mit einer CNC-Steuerung, welche' wenigstens zwei Datenverarbeitungsebenen, insbesondere eine Datensatzvorbereitungsebene (150) und eine Datensatzabarbeitungsebene (160) umfasst,
**gekennzeichnet durch**
den jeweiligen Datenverarbeitungsebenen zugeordnete Taktzeiterfassungsmittel (120 - 124) zur Erfassung von Taktzeiten von Teilsystemem in den jeweiligen Datenverarbeitungsebenen, und
Mittel zum Vergleichen und zeitlichen In-Beziehung-Setzen der für die jeweiligen Datenverarbeitungsebenen ermittelten Taktzeiten.

2. Automatisierungssystem nach Anspruch 1, **gekennzeichnet durch** Mittel zur Visualisierung der ermittelten Taktzeiten.

3. Automatisierungssystem nach einem der Ansprüche 1 oder 2, **gekennzeichnet durch** Mittel zum regelmäßigen oder selektiven Beaufschlagen und/oder Abfragen der Taktzeiterfassungsmittel derart, dass Taktzeiten neu ermittelbar sind.

4. Automatisierungssystem nach einem der vorstehenden Ansprüche, **dadurch gekennzeichnet, dass** die Teilsysteme Drive-, SPS-, NC-, und/oder RC-Systeme umfassen.

5. Automatisierungssystem nach einem der vorstehenden Ansprüche, **dadurch gekennzeichnet, dass** die Taktzeiterfassungsmittel (120-124) als zueinander synchronisierte Uhren ausgebildet sind.

6. Verfahren zur Taktzeit-, Prozess- und/oder Maschinenoptimierung eines wenigstens zwei Datenverarbeitungsebenen, insbesondere eine Datensatzvorbereitungsebene (150) und eine Datensatzabarbeitungsebene (160) umfassenden Systems, insbesondere Automatisierungssystems,
**dadurch gekennzeichnet, dass** den jeweiligen Datenverarbeitungsebenen zugeordnete Taktzeiten'von Teilsystemen in den jeweiligen Datenverarbeitungsebenen ermittelt werden und die für die jeweiligen Datenverarbeitungsebenen ermittelten Taktzeiten miteinander verglichen und zeitlich in Beziehung zueinander gebracht werden.

7. Verfahren nach Anspruch 6, **dadurch gekennzeichnet, dass** die ermittelten Taktzeiten visualisiert werden.

8. Automatisierungssystem nach einem der Ansprüche 6 oder 7, **dadurch gekennzeichnet, dass** die Taktzeiten regelmäßig oder selektiv neu ermittelt werden.
